(19) Europäisches Patentamt

European Patent Office

Office européen des brevets

(11) **EP 1 194 706 B1**

(12) **EUROPEAN PATENT SPECIFICATION**

(45) Date of publication and mention
of the grant of the patent:
**15.09.2004 Bulletin 2004/38**

(51) Int Cl.⁷: **F16H 1/32**

(21) Application number: **01901643.5**

(22) Date of filing: **18.01.2001**

(86) International application number:
**PCT/SI2001/000003**

(87) International publication number:
**WO 2001/052615 (26.07.2001 Gazette 2001/30)**

(54) **GEAR DRIVE WITH WOBBLING CROWN WHEEL**

TAUMELRADGETRIEBE

TRANSMISSION PAR ENGRENAGES AVEC COURONNE DE PRECESSION

(84) Designated Contracting States:
**DE FR GB IT**

(30) Priority: **20.01.2000 SI 200000008**

(43) Date of publication of application:
**10.04.2002 Bulletin 2002/15**

(73) Proprietor: **Cizl, Milan**
**8254 Globoko (SI)**

(72) Inventor: **Cizl, Milan**
**8254 Globoko (SI)**

(74) Representative: **Matschnig, Franz, Dipl.-Ing.**
**Siebensterngasse 54**
**1070 Wien (AT)**

(56) References cited:
**GB-A- 2 134 208       NL-A- 7 802 565**
**US-A- 3 540 307       US-A- 5 893 813**

## Description

The object of the invention is a gear composed of a pair of bevel gear wheels where the driving gear wheel does not rotate but wobbles upon the driven one. The invention is classified according to the international patent classification as F16 H 1/04.

GB-A-2134208 discloses a gear drive as outlined in the preamble of claim 1.

The technical problem solved by the invention lies in the structure of the gear where a single pair of gear wheels makes a transmission ratio possible to no limit (the only limit is a wheel diameter). Self-locking of the gear is another feature which results not from its efficiency but from kinematics itself and from equilibrium of forces. A solution known as Cyclo Speed Reducers was presented in 1931 by Lorenz Braren, holding the comparable transmission ratio possible, but its realisation is technically very demanding. Another possible solution to high transmission ratios is a gear where one of the gear wheels has internal toothing. Neither of these solutions is self-locking.

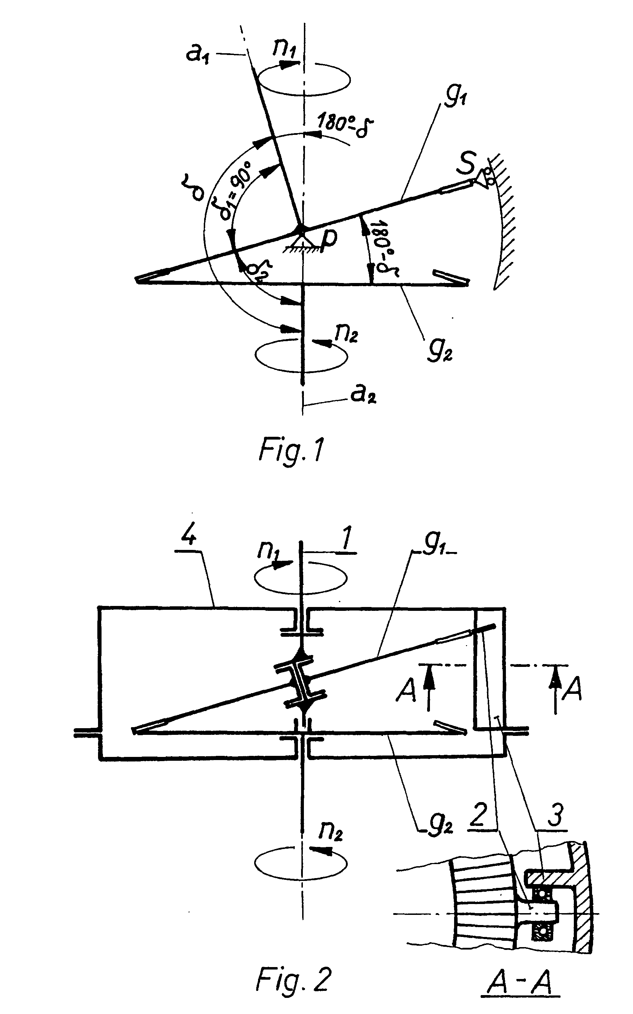

In our invention the problem of high transmission ratio and complete self-locking has been solved by using a pair of gear wheels with conical toothing, where the driving gear wheel does not rotate around its axis but uses special kinematics, a so called wobbling movement. This principle is described in Figures 1 and 2:

     Fig. 1: Kinematics of the gear wheel pair
     Fig. 2: Schematic layout of the gear

The angle between the axes of the driving shaft $a_1$ and the driven one $a_2$ is $\delta$ (Fig. 1).

It amounts to $90° < \delta < 180°$.

If the driving wheel $g_1$ is placed on the point of axes' intersection P, its kinematics cone finds itself in the plane (disc), and the angle $\delta_1$ comes to 90°, that is characteristic for a crown wheel. The crown wheel $g_1$ is then supported by a universal joint (movable bearing) at point P, so that its rotation around its own axis and $a_2$ axis is blocked (held up). Here $a_2$ axis is the main axis of the gear. If axis $a_1$ spins around axis $a_2$ at $n_1$ number of revolutions, the crown wheel $g_1$ does not perform planetary motion any more, but it wobbles at an angle of 180° - $\delta$ upon the gear wheel $g_2$. With no rotation of $g_1$ $g_2$ has to turn towards $g_1$ movement at each revolution of axis $a_1$ around $a_2$ for $n_2 = (t_1 - t_2)/t_2$, where $n_2$ stands for the number of revolutions of the driven shaft, and $t_1$ and $t_2$ are the numbers of teeth in each gear wheel.

Transmission ratio follows:

$$i = \frac{n_1}{n_2} = \frac{t_2}{t_1 - t_2} = \frac{\cos(180° - \delta)}{1 - \cos(180° - \delta)}$$

The support S, which holds up (or rather prevents) rotation of $g_1$ is designed so that the reaction force of the support acts in the plane of $g_1$. When bringing the driving moment to a standstill, and the moment of load acts on $g_2$, $g_1$ is in the state of equilibrum. Thus, the gear obtains the property of self-locking.

Fig. 2 shows practical execution of a gear with a wobbling crown wheel. The wobbling motion of $g_1$ is achieved by the shape of the driving shaft (1), which axis is broken up (cranked shaft). This shaft is supported radially and axially, so it is on one side in the gearbox (housing) 4, and in the driven gear wheel $g_2$ on the other.

The support, preventing the rotation of $g_1$ can be designed in various ways. In Fig. 2 there is a rib (3) on the housing 4 along with the bearing of thumb 2 is moving. The thumb is fixed to $g_1$.

Based on the described wobbling mechanism and the support design, said self-locking is irrespective of gear drive efficiency.

## Claims

1. Gear drive with wobbling crown wheel, wherein

   - the gear drive is composed of a driving gear wheel ($g_1$) and a driven gear wheel ($g_2$) each having an axis ($a_1$, $a_2$),
   - the angle $\delta$ between said axes ($a_1$, $a_2$) of the gear wheels ($g_1$, $g_2$) amounts to $90° < \delta < 180°$,
   - the driving gear wheel ($g_1$) is placed on the intersection point (P) of the gear wheel axes ($a_1$, $a_2$),
   - said driving gear wheel ($g_1$) is a crown wheel having an angle $\delta_1 = 90°$,
   - said driving gear wheel ($g_1$) wobbles around said intersection point (P) upon the driven gear wheel ($g_2$) so that the axis ($a_1$) of the driving gear wheel rotates around the axis ($a_2$) of the driven gear wheel at an angle of 180°-$\delta$,
   - said driving gear wheel ($g_1$) comprises a support (S, 2) so that rotation of said driving gear wheel ($g_1$) around its own axis is blocked, resulting in a rotation of the driven gear wheel ($g_2$),

   **characterised in that**

   - said support (S) is situated in the plane of the driving gear wheel ($g_1$), namely, the plane of the gear teeth and the intersection point (P) of said axes ($a_1$, $a_2$).

2. Gear drive as claimed in claim 1, **characterised in that** the wobbling motion of the driving gear wheel ($g_1$) is achieved by the shape of a driving shaft (1) realized as a cranked shaft.

3. Gear drive as claimed in claim 2, **characterised in that**
   the axis of the driving shaft (1) realized as said cranked shaft passes through said intersection point (P).

4. Gear drive as claimed in any one of claims 1 to 3, **characterised in that**
   the support is realised as a thumb (2) situated in the plane of the driving gear wheel ($g_1$) and cooperating with a rib (3) of a housing (4) of the gear drive.

## Patentansprüche

1. Ein Zahnradgetriebe mit Taumelkegelrad, wobei

   - das Getriebe aus einem Antriebszahnrad ($g_1$) und einem getriebenen Zahnrad ($g_2$) aufgebaut ist, die Achsen ($a_1$, $a_2$) haben,

   - der Winkel $\delta$ zwischen den Achsen ($a_1$, $a_2$) der Zahnräder ($g_1$, $g_2$) $90° < \delta < 180°$ beträgt,

   - das Antriebszahnrad ($g_1$) in dem Schnittpunkt (P) der Zahnradachsen ($a_1$, $a_2$) gestellt ist,

   - das Antriebszahnrad ($g_1$) ein Kronenrad mit einem Winkel $\delta_1 = 90°$ ist,

   - das Antriebszahnrad ($g_1$) um den Schnittpunkt (P) in Bezug auf das betriebene Zahnrad ($g_2$) taumelt, so dass die Achse ($a_1$) des Antriebzahnrades um die Achse ($a_2$) des getriebenen Zahnrades im Winkel $180° - \delta$ rotiert,

   - das Antriebszahnrad ($g_1$) eine Abstützung (S, 2) aufweist, so dass die Rotation des Antriebszahnrades ($g_1$) um seine eigene Achse blokkiert ist, was zu einer Rotation des getriebenen Zahnrades ($g_2$) führt,

   **dadurch gekennzeichnet, dass**
   die Abstützung (S) in der Ebene des Antriebszahnrades ($g_1$) gelegen ist, und zwar in die Ebene der Getriebezähne und des Schnittpunktes (P) der Achsen ($a_1$, $a_2$).

2. Getriebe nach Anspruch 1, **dadurch gekennzeichnet, dass** die Taumelbewegung des Antriebzahnrades ($g_1$) durch die Form einer Antriebswelle (1), die als Kurbelwelle ausgeführt ist, erreicht wird.

3. Taumelradgetriebe nach Anspruch 2, **dadurch gekennzeichnet, dass** die als Kurbelwelle ausgeführte Achse der Antriebswelle (1) durch den Schnittpunkt (P) verläuft.

4. Getriebe nach einem der Ansprüche 1 bis 3, **dadurch gekennzeichnet, dass** die Unterstützung in Form eines Fingers (2) ausgeführt ist, der sich in der Ebene des Antriebzahnrades ($g_1$) befindet und mit einer Rippe (3) an dem Gehäuse (4) zusammenwirkt.

## Revendications

1. L'engrenage avec une roue dentée couronne en précession où

   - l'engrenage est composé d'une roue dentée de commande ($g_1$) et d'une roue dentée pousée ($g_2$), qui ont toutes les deux les axes ($a_1$, $a_2$),

   - l'angle $\delta$ entre les axes ($a_1$, $a_2$) des roues dentées ($g_1$, $g_2$) est $90° < \delta < 180°$,

   - la roue dentée ($g_1$) est placée dans le point d'intersection (P) des axes des roues dentées ($a_1$, $a_2$),

   - la roue dentée ladite est une roue dentée couronne avec l'angle $\delta = 90°$,

   - la roue dentée de commande ladite ($g_1$) est en précession autour le point d'intersection (P) sur la roue dentée poussée ($g_2$), ainsi que l'axe ($a_1$) de la roue dentée de commande tourne autour de l'axe ($a_2$) de la roue dentée poussée sous l'angle $180° - \delta$,

   - La roue dentée ladite ($g_1$) a un soutènement (S, 2), ainsi que la rotation de la roue dentée ladite ($g_1$) autour de son propre axe est bloquée, ce qui provoque la rotation de la roue dentée poussée ($g_2$),

   **caractérisé en ce que**
   le soutènement (S) est placé dans la plaine de la roue dentée de commande ($g_1$), c'est-à-dire, dans la plaine des dents et du point d'interséction (P) des axes ladites ($a_1$, $a_2$).

2. L'engrenage selon la revendication 1, **caractérisé en ce que** le mouvement de précession de la roue dentée de commande ($g_1$) est atteint avec la forme de l'arbre de commande (1) fait avec un axe rompu.

3. L'engrenage selon la revendication 2, **caractérisé en ce que** l'axe de l'arbre de commande (1), qui est rompu, passe par le point d'intersection (P).

4. L'engrenage selon n'importe quelle des revendications de 1 à 3, **caractérisé en ce que** le soutènement fait dans la forme du doigt (2), qui se trouve dans la plaine de la roue dentée de commande ($g_1$) et se déplace sur la cône (3) du carter (4).

Fig. 1

Fig. 2

A - A